# EUROPEAN PATENT SPECIFICATION

(11) **EP 1 395 403 B1**
(45) Date of publication and mention of the grant of the patent: **26.09.2007**
(21) Application number: 02733728.6
(22) Date of filing: 22.05.2002
(51) Int. Cl.: B27B 31/00, B65G 47/24

(54) **AN APPARATUS FOR THE INDIVIDUAL HEIGHT SORTING OF BOARDS**
VORRICHTUNG FÜR INDIVIDUELLE HÖHENSORTIERUNG VON PLATTEN
APPAREIL DE TRI DE PANNEAUX INDIVIDUELS SELON LA HAUTEUR

(30) Priority: 23.05.2001 SE 0101841
(43) Date of publication of application: 10.03.2004
(73) Proprietor: C Gunnarssons Verkstads AB, 340 30 Vislanda (SE)
(72) Inventor: GUNNARSSON, Cenneth, S-340 30 Vislanda (SE)
(74) Representative: Wallengren, Yngvar
(86) International application number: PCT/SE2002/000972
(87) International publication number: WO 2002/100615

(56) References cited:
- DE-A1- 3 604 095
- SE-B- 417 498
- SE-C2- 510 119
- US-A- 3 822 778
- US-A- 5 662 203
- US-A- 5 921 376

## Description

The present invention relates to an apparatus for the individual feeding of boards from a first conveyor to either a second or third conveyor, where the second and third conveyors are at different height levels, the first conveyor displaying carriers or dogs for fixing the position of the boards thereon.

### BACKGROUND ART

Apparatuses are previously known in the art for the individual feeding of boards from an incoming, first conveyor to two mutually superjacent outgoing conveyors. In one such prior art apparatus, there is disposed, between the output end of the incoming conveyor and the input ends of the two outgoing conveyors, a vertically pivotal flap which is pivotal about an axis which is parallel with the axis of rotation of the wheels over which the outgoing end of the incoming conveyor run. The flap is provided with a fourth conveyor which feeds the boards along the flap which is adjustable in the vertical direction for discharging the boards either to the upper or the lower outgoing conveyor.

An apparatus of this type may function well in such situations where the feeding rate of the individual boards is relatively low.

If individual boards, for example alternatingly, are to be fed to the upper and the lower conveyor and these boards enter with short intervals in time, the moving mass in the flap is so great that this does not have time to switch in the required manner. A considerable limitation in the output capacity of the plant will therefore be the result.

### PROBLEM STRUCTURE

The present invention has for its object to design the apparatus intimated by way of introduction such that it may, at a very high tempo and with a high level of operational reliability, individually feed boards to the two mutually superjacent outgoing second and third conveyors. The present invention further has for its object to design the apparatus so that it will be relatively simple and economical to manufacture.

### SOLUTION

The objects forming the basis of the present invention will be attained if the apparatus intimated by way of introduction is characterised by a fourth conveyor whose direction of conveyance, at an acute angle in a vertical plane, intersects the direction of conveyance of the first conveyor and which has a number of transfer devices which are individually switchable between protracted, active lifting positions where they move synchronously with the dogs on the first conveyor from a level under it to a level at the third conveyor above the first conveyor, and retracted, inactive positions where they are located below the level of the first conveyor.

In that the fourth conveyor is stationarily disposed and thus is not moveable in its entirety in the vertical direction but only its transfer devices, the moving mass may be reduced considerably in relation to prior art technology. From this it follows that the output rate of the installation may also be considerably increased.

### BRIEF DESCRIPTION OF THE ACCOMPANYING DRAWINGS

The present invention will now be described in greater detail hereinbelow, with reference to the accompanying drawings. In the accompanying drawings:
Fig. 1 is a schematic side elevation of the apparatus according to the present invention in a state where the transfer devices are located in their protracted, active positions; and
Fig. 2 is a view corresponding to that of Fig. 1 of the apparatus according to the present invention in a state where the transfer devices are located in their retracted, passive positions.

### DESCRIPTION OF PREFERRED EMBODIMENT

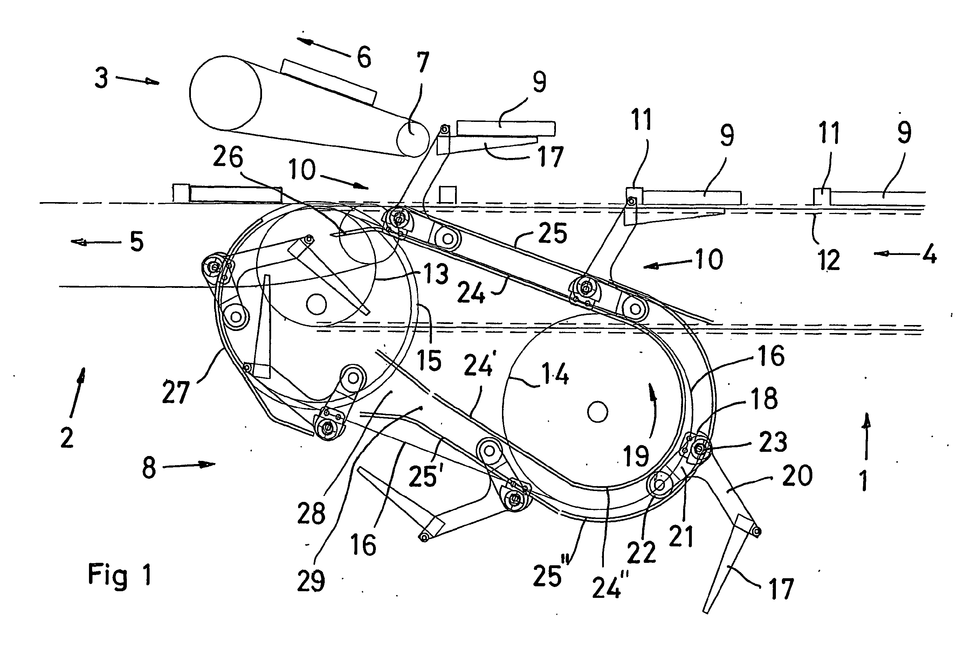

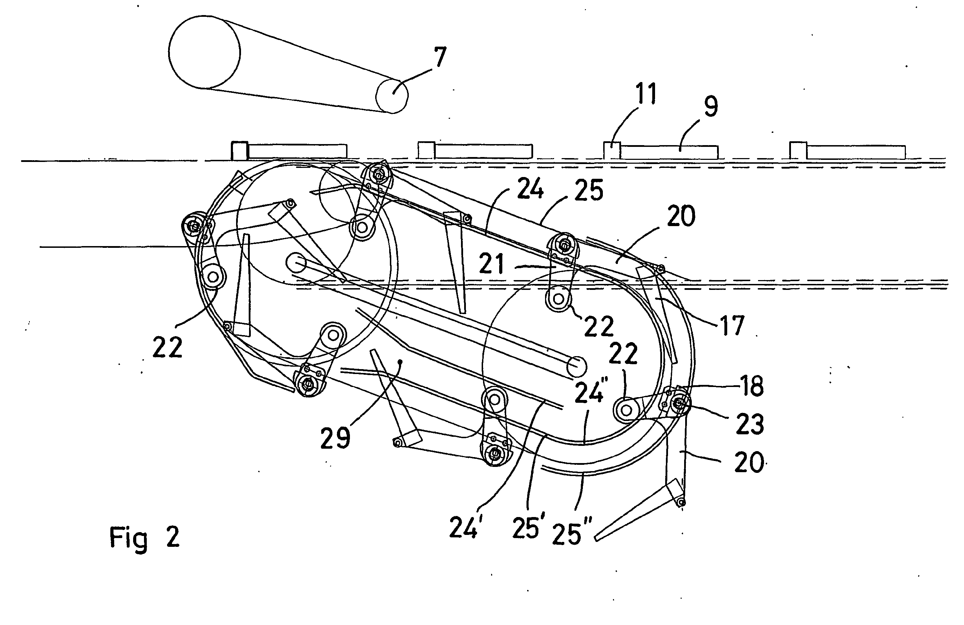

In Fig. 1 and 2, all parts and details which are of no major importance as regards an understanding of the present invention have been omitted. Thus, all frames in the apparatus according to the present invention, wheels, bearings etc. which support the conveyors included in the present invention etc. are absent.

Further, to the extent such expressions as upwards, downwards, upper or lower are employed, these relate to circumstances which apply when the installation is mounted in a condition for operation.

The apparatus according to the present invention includes a first conveyor 1 which may also be designated ingoing conveyor, and further a second conveyor 2 which may be designated an outgoing conveyor and finally a third conveyor 3 which may also be designated an outgoing conveyor. The second and third conveyors 2 and 3, respectively, are located at different levels in the vertical direction, where the third conveyor is located, in the illustrated embodiment, a distance above the second conveyor.

In a special case, the first and second conveyors may be a single long conveyor 1 which, in such an event, is to be considered as through-going.

The first conveyor has a first conveyance direction 4, the second conveyor a second conveyance direction 5 and the third conveyor a third conveyance direction 6, and in the illustrated embodiment the first and second conveyance directions are both approximately horizontal and are directed from right to left in the figures. The third conveyance direction 6 makes an acute angle in an upward direction with the first conveyance direction 4.

In the region at the input end 7 to the third conveyor 3 and slightly ahead of it in the conveyance direction 4, there is disposed a transfer device 8 which is designed to transfer, from the first conveyor 1, individual boards 9 either to the second conveyor 2 or to the third conveyor 3, respectively. The transfer device 8 has a number of transfer members 10 which are disposed to move synchronously with the boards 9 on the first conveyor and which are switchable between retracted, passive states where the boards 9 arriving on the first conveyor are transferred to the second conveyor 2, and active, protracted positions where they transfer the boards 9 arriving on the first conveyor to the third conveyor 3.

It was mentioned above that the transfer members 10 are to move synchronously with the boards 9 on the first conveyor 1. To this end, the first conveyor 1 has means for establishing well defined positions for the boards on the first conveyor. This is realised in that the first conveyor has dogs 11 which are disposed with uniform spacing and which, from the rear, shunt the boards 9 on the first conveyor.

The system of localising the boards 9 at accurately determined positions on the first conveyor by means of dogs 11 can function well in many situations. However, there is the risk that, when the output rate is increased, the boards will in the event of a stoppage which may take place extremely rapidly, continue their movement and slide forwards away from the dogs so that there is no longer any guarantee that the boards actually abut against and are shunted forwards by the dogs. In order to remedy this problem, there is provided, in the region ahead of the third conveyor 3 and the transfer device 8, an accelerator device 12 whose purpose is to exercise a forward force in the conveyance direction 4 on the individual boards 9 so that these are brought from their established positions against the front sides of the dogs, to positions where they are held, under the action of the accelerator device, against the rear side of the dogs disposed ahead of them. In that the accelerator device constantly subjects the boards to a force in the conveyance direction 4 in relation to the rear sides of the dogs 11, the feature will also be afforded that disruptions in the exact positions of the boards 9 will also be rapidly corrected. Hence, the accelerator device affords the possibility of further increasing the output rate of the apparatus in that the risk of the boards becoming disordered in a rapid stoppage is eliminated.

In one practical embodiment, the accelerator device 12 consists of a fifth conveyor which has the same direction of movement 4 as the first conveyor but which moves at a greater linear speed than the first conveyor. The fifth conveyor is further at a slightly higher level than the fist conveyor, for which reason, the boards resting on the first conveyor will be raised slightly by the fifth conveyor when they pass in onto it and are accelerated so that they come into contact with the rear sides of the dogs 11. The left-hand end of the fifth conveyor in the figures runs over a schematically illustrated wheel 13. The shaft about which the wheel 13 rotates may also serve for carrying the wheels about which the first conveyor 1 runs.

In the illustrated embodiment, the transfer device 8 is designed as a fourth conveyor which runs about the two wheels 14 and 15. The above-mentioned transfer devices 10 are fixed in the chain, strap, belt 16 or the like which runs about the two wheels 14 and 15, the transfer devices being provided with lifting members 17. Pivots 18 are secured in the chain 16 and in which the transfer devices 10 proper are pivotally secured about pivot axes 23 which are parallel with the axes of rotation of the two wheels 14 and 15. The above mentioned wheels rotate in the direction of the arrow 19.

The transfer devices 10 are angled and have, in the active position, projecting lifting arms 20 which, in their outer, free end, carry the lifting device 17 and a rearwardly directed guide arm 21 which, in its rear end, has a guide member which, in this embodiment, consists of a guide roller 22. In the transition region between the lifting arm 20 and the guide arm 21, the transfer device 10 is connected to the pivot 18 about a pivot axis 23 which, as was mentioned above, is parallel with the axes of rotation about which the two wheels 14 and 15 are rotary. The axis of rotation 23 is thereby also parallel with the shaft which carries the wheel 13 in the accelerator device 12.

The chain 16 has an upper part which intersects the direction of conveyance 4 of the first conveyor 1 at an acute angle in the vertical direction. With the transfer devices 10 in their protracted positions, this implies that the lifting devices 17 of the transfer devices are applied against the boards 9 from beneath which, because of the angular difference between the first conveyor and the upper part of the fourth conveyor, lift the boards from the level of the first conveyor to the level of the third conveyor 3.

On the other hand, in the retracted position of the transfer devices 10 (shown in Fig. 2), both the lifting arms 20 and the lifting devices 17 mounted thereon are constantly below the level of the conveyance path of the first conveyor. This implies that, with the transfer devices 10 in their retracted position, they will not come into contact with the boards 9 when these pass from the first conveyor to the second conveyor 2.

In the protracted, active position of the transfer devices 10 (shown in Fig. 1 along the upper part of the chain 16), the guide roller 22 is located in between and in a guide rail 24 and an outer guide rail 25. This implies that the transfer devices are positively held in their protracted, active positions and by a tight fit between the guide rails 24 and 25 and the guide roller 22, oscillation movements in the lifting arm 20 are also prevented. The outer guide rail 25 terminates at a point where it begins to approach the movement path of the upper part of the first conveyor 1 from beneath. The inner guide rail 24 has an end portion 26 which is angled inwards towards the axis of rotation about which the wheel 15 rotates. When the guide roller 22 has released from the end portion, the transfer device 10 will, under force of gravity, or under the action of a spring, fall back in a clockwise direction until the guide roller 22 arrives in abutment against a circular bent guide rail 27 which follows the periphery of the wheel 15 for just under half a turn.

When the transfer device 10 has arrived at a position where its pivot 18 is approximately located directly beneath the axis of rotation about which the wheel 15 rotates, the guide arm 21 is located in a position substantially straight upwards. When the pivot 18 subsequently follows the straight, lower part of the chain 16, the guide member 22 enters into a funnel-shaped mouth 28 between the inner guide rail 24' and the outer guide rail 25', which, from the mouth, run first straight on to a position flush with the axis of rotation of the wheel 14 and then around this wheel up to the above-described straight path. When the guide roller 22 has arrived in the mouth 28 between the two guide rails 24' and 25', the guide roller will pass between them, around the wheel 14 and up to the upper part of the chain 16 as was described above. During this movement, the transfer device will be pivoted in a counterclockwise direction from the partly protracted position along the lower part of the chain 16 to the wholly protracted position along the upper part of this chain.

In order to realise a switch of the transfer devices from the above-described protracted and active positions to the retracted positions according to Fig. 2, the lower and straight portions 24' and 25' of the guide rails 24 and 25 are switchable between the above-described position for activating the transfer devices 10 to a passive position according to Fig. 2 where the outer guide rail 25" lies in line with the inner guide rail 24' in the region below the shaft about which the wheel 14 rotates. This switching takes place in that the guide rails 24' and 25' are pivoted about an axis which is approximately parallel with the axes of rotation of the wheels 14 and 15 and which, in the figures, is intimated at reference numeral 29.

In order to achieve such a switching of the two guide rails 24' and 25', they are interconnected with one another and pivotally suspended in the region of the funnel-shaped mouth 28 so that they may be pivoted between the position shown in Fig. 1 and the position shown in Fig. 2.

With the guide rails 24' and 25' in the position according to Fig. 2, a guide roller which passes in through the funnel-shaped mouth 28 will pass between the two guide rails 24' and 25' in order subsequently to be led in radially inside the guide rail 24" and on the underside of the straight and upper portion of the guide rail 24. In this position, the transfer devices 10 are pivoted in a clockwise direction with the guide arms directed downwards and the lifting arms directed rearwards along the upper part of the chain 16. In this clockwise pivoted position of the transfer devices 10, they will completely pass under the upper part of the first conveyor 1 so that no engagement with the boards 9 thereby takes place.

In the foregoing it was described how the transfer devices 10 are pivotal about axes which are parallel with the axes of rotation about which the two wheels 14 and 15 rotate. In an alternative embodiment, it is also possible to pivot the transfer devices about axes which are parallel with the straight upper and lower parts of the chain 16 and which are parallel with the tangent to the chain in the regions where this runs around the two wheels 14 and 15. The design of the system of guide rails required for switching the transfer devices between the protracted, active positions and the retracted, passive positions is analogous, and in which event it should be emphasised that the part of the guide rails 24' and 25' is of low mass so that, as a result, rapidity of movement may be considerable. This also implies that, at extremely high linear transport speeds for the boards 9, the switching of the guide rails 24' and 25' may also take place so rapidly that, in principle, the boards may be fed alternatingly to the second and third conveyors.

## Claims

1. An apparatus for the individual feeding of boards (9) from a first conveyor (1) to either a second or third conveyor (2, 3, respectively), where the second and third conveyors are at different height levels, the first conveyor having carriers or dogs (11) for establishing the position of the boards thereon, **characterised by** a fourth conveyor (8) whose direction of conveyance intersects, at an acute angle in a vertical plane, the direction of conveyance (4) of the first conveyor (1), and which has a number of transfer devices (10) which are individually switchable between protracted, active positions, where they move synchronously with the dogs (11) on the first conveyor (1) from a level below this to a level of the third conveyor (3) above the first conveyor, and retracted, inactive positions where they are located below the level of the first conveyor.

2. The apparatus as claimed in claim 1, **characterised in that** there is disposed, along the first conveyor (1) in the region immediately before and at least partly along the fourth conveyor (8), an accelerator device (12) which is disposed to move and hold the boards (9) to and in abutment, respectively, against the rear sides of the dogs (11).

3. The apparatus as claimed in claim 2, **characterised in that** the accelerator device is a fifth conveyor (12) of a greater transport speed than the first conveyor (1).

4. The apparatus as claimed in any of claims 1-3, **characterised in that** the transfer devices (10) are connected to the fourth conveyor (8) pivotally about axes (23) which are substantially parallel with the shafts to the wheels (13, 14) over which the fourth conveyor runs.

5. The apparatus as claimed in any of claims 1-4, **characterised in that** the transfer devices (10) have approximately the same mutual spacing along the fourth conveyor (8) as the distances between adjacent dogs (11) on the first conveyor (1).

6. The apparatus as claimed in any of claims 1-5, **characterised in that the** transfer devices (10) are angular with a lifting arm (20) and a guide arm (21), the transfer devices being switchable between and holdable in their active and inactive positions by means of guide rails (24, 25; 24', 25'; 24", 25") disposed in association with the fourth conveyor (8).

7. The apparatus as claimed in claim 6, **characterised in that** the transfer devices (10) are pivotally united with the fourth conveyor in the region of the union between the lifting arms (20) and each respective guide arm (21).

8. The apparatus as claimed in any of claims 6 or 7, **characterised in that** the guide rails include a moving portion (24', 25') which, in a first activation state, transfer an individual transfer device (10) from the inactive position to the active position, and which, in a second position, retain the transfer devices in their inactive position.

9. The apparatus as claimed in any of claims 6-8, **characterised in that** the transfer devices (10) may be returned from their active, protracted position to the passive positions under the force of gravity or by spring force.

## Patentansprüche

1. Vorrichtung zur individuellen Zuführung von Platten (9) von einer ersten Fördereinrichtung (1) zu entweder einer zweiten oder einer dritten Fördereinrichtung (2 bzw. 3), wo die zweiten und dritten Fördereinrichtungen unterschiedliche Höhenniveaus aufweisen, wobei die erste Fördereinrichtung Träger oder Mitnehmer (11) zur Einrichtung der Position der Platten auf derselben aufweist,
**gekennzeichnet durch** eine vierte Fördereinrichtung (8), deren Förderrichtung - die Förderrichtung (4) der ersten Fördereinrichtung (1) - in einem spitzen Winkel in einer vertikalen Ebene schneidet und die eine Anzahl von Übertragungseinrichtungen (10) aufweist, die individuell zwischen ausgeschwenkten, aktiven Stellungen, in denen sie sich synchron mit den Mitnehmern (11) auf der ersten Fördereinrichtung (1) von einer Höhe unterhalb von derselben bis zu einer Höhe der dritten Fördereinrichtung (3) um die erste Fördereinrichtung bewegen, und eingeschwenkten, inaktiven Stellungen, in denen sie sich unterhalb der Höhe der ersten Fördereinrichtung befinden, umgeschaltet werden können.

2. Vorrichtung nach Anspruch 1, **dadurch gekennzeichnet, dass** entlang der ersten Fördereinrichtung (1) in der Region unmittelbar vor der vierten Fördereinrichtung (8) und zumindest teilweise an dieser entlang eine Beschleunigungseinrichtung (12) angeordnet ist, die so ausgelegt ist, dass sie die Platten (9) zu den Rückseiten der Mitnehmer (11) bewegt bzw. dort in Anlage hält.

3. Vorrichtung nach Anspruch 2, **dadurch gekennzeichnet, dass** die Beschleunigungseinrichtung eine fünfte Fördereinrichtung (12) mit einer höheren Transportgeschwindigkeit als die erste Fördereinrichtung (1) ist.

4. Vorrichtung nach einem der Ansprüche 1 - 3, **dadurch gekennzeichnet, dass** die Übertragungseinrichtungen (10) mit der vierten Vorrichtung (8) um Achsen (23) schwenkbar verbunden sind, die im Wesentlichen parallel zu den Wellen der Räder (13, 14) verlaufen, über die die vierte Fördereinrichtung läuft.

5. Vorrichtung nach einem der Ansprüche 1-4, **dadurch gekennzeichnet, dass** die Übertragungseinrichtungen (10) entlang der vierten Fördereinrichtung (8) etwa den gleichen Abstand voneinander aufweisen wie die Abstände zwischen benachbarten Mitnehmern (11) auf der ersten Fördereinrichtung.

6. Vorrichtung nach einem der Ansprüche 1 - 5, **dadurch gekennzeichnet, dass** die Übertragungseinrichtungen (10) gewinkelt sind mit einem Hubarm (20) und einem Führungsarm (21), wobei die Übertragungseinrichtungen mittels Führungsschienen (24, 25; 24', 25', 24" , 25 "), die in Zuordnung mit der vierten Fördereinrichtung (8) angeordnet sind, zwischen ihren aktiven und inaktiven Stellungen umgeschaltet und in diesen gehalten werden können.

7. Vorrichtung nach Anspruch 6, **dadurch gekennzeichnet, dass** die Übertragungseinrichtungen (10) mit der vierten Fördereinrichtung in der Vereinigungsregion zwischen den Hubarmen (20) und den jeweiligen Führungsarmen (21) schwenkbar vereinigt sind.

8. Vorrichtung nach einem der Ansprüche 6 oder 7, **dadurch gekennzeichnet, dass** die Führungsschienen einen Bewegungsabschnitt (24', 25') einschließen, der in einem ersten Aktivierungszustand eine einzelne Übertragungseinrichtung (10) aus der inaktiven Stellung in die aktive Stellung überführt und der in einer zweiten Position die Übertragungseinrichtungen in ihrer inaktiven Stellung hält.

9. Vorrichtung nach einem der Ansprüche 6 - 8, **dadurch gekennzeichnet, dass** die Übertragungseinrichtungen (10) aus ihrer aktiven, ausgeschwenkten Stellung aufgrund der Schwerkraft oder durch eine Federkraft zu ihren passiven Stellungen zurückgebracht werden können.

## Revendications

1. Appareil pour la distribution individuelle de panneaux (9) d'un premier convoyeur (1) à un deuxième ou un troisième convoyeur (2, 3, respectivement), dans lequel les deuxième et troisième convoyeurs sont à des hauteurs différentes, le premier convoyeur ayant des éléments porteurs ou des taquets (11) pour établir la position des panneaux sur ce convoyeur, **caractérisé par** un quatrième convoyeur (8) dont la direction de transport est en intersection, suivant un angle aigu dans un plan vertical, avec la direction de transport (4) du premier convoyeur (1), et qui comporte un certain nombre de dispositifs de transfert (10) qui sont individuellement commutables entre des positions actives sorties, dans lesquelles ils se déplacent en synchronisme avec les taquets (11) du premier convoyeur (1), d'un niveau inférieur à celui-ci jusqu'à un niveau du troisième convoyeur (3) au-dessus du premier convoyeur, et des positions inactives rétractées dans lesquelles ils sont situés au-dessous du niveau du premier convoyeur.

2. Appareil selon la revendication 1, **caractérisé en ce que**, le long du premier convoyeur (1) dans la région immédiatement avant et au moins en partie le long du quatrième convoyeur (8), il est prévu un dispositif accélérateur (12) qui est agencé pour déplacer et maintenir les panneaux (9) en butée, respectivement, contre les côtés arrière des taquets (11).

3. Appareil selon la revendication 2, **caractérisé en ce que** le dispositif accélérateur est un cinquième convoyeur (12) ayant une vitesse de transport plus grande que celle du premier convoyeur (1).

4. Appareil selon une quelconque des revendications 1 à 3, **caractérisé en ce que** les dispositifs de transfert (10) sont connectés au quatrième convoyeur (8) de façon pivotante autour d'axes (23) qui sont sensiblement parallèles aux arbres des roues (13, 14) sur lesquelles le quatrième convoyeur se déplace.

5. Appareil selon une quelconque des revendications 1 à 4, **caractérisé en ce que** les dispositifs de transfert (10) ont approximativement le même espacement mutuel le long du quatrième convoyeur (8) que les distances entre taquets adjacents (11) sur le premier convoyeur (1).

6. Appareil selon une quelconque des revendications 1 à 5, **caractérisé en ce que** les dispositifs de transfert (10) sont inclinés par rapport à un bras de levage (20), et un bras de guidage (21), les dispositifs de transfert étant commutables entre leurs positions active et inactive et pouvant être maintenues dans ces positions au moyen de rails de guidage (24, 25 ; 24', 25' ; 24", 25") disposés en association avec le quatrième convoyeur (8).

7. Appareil selon la revendication 6, **caractérisé en ce que** les dispositifs de transfert (10) sont reliés de façon pivotante avec le quatrième convoyeur dans la région de l'union entre les bras de levage (20) et chaque bras de guidage respectif (21).

8. Appareil selon une quelconque des revendications 6 ou 7, **caractérisé en ce que** les rails de guidage comprennent une partie mobile (24', 25') qui transfère, dans un premier état d'activation, un dispositif de transfert individuel (10) de la position inactive à la position active, et qui retient, dans une deuxième position, les dispositifs de transfert dans leur position inactive.

9. Appareil selon une quelconque des revendications 6 à 8, **caractérisé en ce que** les dispositifs de transfert (10) peuvent être ramenés de leur position active sortie à leur position passive sous l'action de la force de gravité ou par une force élastique.
